# EUROPEAN PATENT APPLICATION

(11) **EP 3 627 631 A1**
(43) Date of publication of application: **25.03.2020**
(21) Application number: 18818642.3
(22) Date of filing: 17.05.2018
(51) Int. Cl.: H01R 13/60

(54) **NETWORK DEVICE AND LONGITUDINAL INTERFACE**

(30) Priority: 14.06.2017 CN 201710449263
(71) Applicant: Huawei Technologies Co., Ltd., Longgang District Shenzhen, Guangdong 518129 (CN)
(72) Inventor: TAN, Guobin, Shenzhen Guangdong 518129 (CN); LI, Jian, Shenzhen Guangdong 518129 (CN); GUO, Peijun, Shenzhen Guangdong 518129 (CN); LI, Shiqiang, Shenzhen Guangdong 518129 (CN); ZHENG, Guolan, Shenzhen Guangdong 518129 (CN)
(74) Representative: Kreuz, Georg Maria
(86) International application number: PCT/CN2018/087265
(87) International publication number: WO 2018/228124

(57) **Abstract**

A network device and a vertical interface are disclosed. The network device includes a panel (31), a printed circuit board PCB (32), and N vertical interfaces (33). The vertical interface is an interface whose width is less than a height. The panel is connected to the PCB, and the panel includes N vertical openings, where N is greater than or equal to 2. Each of the N vertical interfaces includes a housing (331), a connection component (332), and a connector (333). The housing is configured to accommodate the vertical interface into the panel by using one of the N vertical openings on the panel. The connection component is configured to connect the vertical interface to the PCB. The connector is configured to transmit a signal to the PCB by using the connection component. When a width of the panel of the network device is fixed, a quantity of interfaces deployed on the panel can be increased, and panel utilization can be improved by using the foregoing device.

## Description

This application claims priority to Chinese Patent Application No. 201710449263.4, filed with the Chinese Patent Office on June 14, 2017 and entitled "NETWORK DEVICE AND VERTICAL INTERFACE", which is incorporated herein by reference in its entirety.

### TECHNICAL FIELD

This application relates to the field of network communications, and in particular, to a network device and a vertical interface.

### BACKGROUND

A network device provides a communications service by transmitting data for a host or a terminal on a network. Data of the host or terminal can be sent to the network device only through an interface on the network device.

An optical interface can provide a higher transmission rate than an electrical interface. Therefore, currently, the network device usually uses optical interfaces. Currently, more widely used optical interfaces are a subscriber connector (English: subscriber connector, SC for short) interface, a small form-factor pluggable (English: small form-factor pluggable, SFP for short) interface, and a quad small form-factor pluggable (English: quad small form-factor pluggable, QSFP for short) interface. Each interface includes a housing (also referred to as a cage) and a connector. The housing is embedded in an opening on a panel of the network device, and is used to isolate and protect the connector. The connector is connected to a printed circuit board (English: Printed circuit board, PCB) in the network device, to exchange data.

To ensure that the network device can be mounted in a standard cabinet, a width of the network device is usually specified. Deploying more interfaces on the panel of the network device can fully utilize a processing capability of an internal chip of the network device, improve space utilization, and reduce costs of the network device. Therefore, how to deploy more interfaces on the panel of the specified width becomes an urgent problem to be resolved in the art.

### SUMMARY

This application provides a network device and a vertical interface, so that more interfaces can be deployed on a panel of the network device when a width of the panel of the network device is fixed, thereby increasing interface density of the panel.

An aspect of this application provides a network device, and the network device includes a panel, a printed circuit board PCB, and N vertical interfaces, where N is greater than or equal to 2. Each of the N vertical interfaces provides at least one optical interface/electrical interface, and a width of each optical interface/electrical interface in the at least one optical interface/electrical interface is less than a height of the optical interface/electrical interface. The panel is connected to the PCB, and the panel includes N vertical openings. Each of the N vertical interfaces includes a housing, a connection component, and a connector. The housing is configured to accommodate the vertical interface into the panel by using one of the N vertical openings on the panel. The connection component is configured to connect the vertical interface to the PCB. The connector is configured to transmit a signal to the PCB by using the connection component.

In a first aspect of this application, the vertical interfaces are deployed on the panel of the network device, and the width of the optical interface/electrical interface provided by the vertical interface is less than the height of the optical interface/electrical interface. Therefore, when a width of the panel of the network device is fixed, more interfaces can be disposed on the panel. This increases interface density of the panel, improves panel size utilization, and increases interface deployment flexibility.

In a first implementation of the first aspect, the connection component includes a plurality of pins, the plurality of pins are disposed at the bottom of the vertical interface in a plurality of rows, and the vertical interface is connected to the PCB by using the plurality of pins.

In the foregoing implementation, the vertical interface is connected to the PCB by using the pins. This can improve assembly efficiency of the network device.

In a second implementation of the first aspect, the connection component includes a cable disposed at a tail of the vertical interface, and the vertical interface is connected to the PCB by using the cable. Because the cable is a flexible connection component, unavailability of the vertical interface due to damage to the connection component can be avoided by connecting the vertical interface and the PCB by using the cable.

According to the first aspect or the first or the second implementation of the first aspect, in a third implementation of the first aspect, some or all of the N vertical interfaces are single-layer interfaces, and each single-layer interface provides one optical interface/electrical interface.

In this application, when a quantity of interfaces needed by the network device is between a quantity of interfaces provided by horizontal single-layer interfaces and a quantity of interfaces provided by horizontal double-layer interfaces, vertical single-layer interfaces can be used to implement a quantity of interfaces provided by conventional horizontal double-layer interfaces, thereby reducing hardware costs and implementation complexity of the device.

According to the first aspect or the first or the second implementation of the first aspect, in a fourth implementation of the first aspect, some or all of the N vertical interfaces are multi-layer interfaces, each multi-layer interface provides at least two optical interfaces/electrical interfaces, and the at least two optical interfaces/electrical interfaces share the connector.

In the foregoing fourth implementation, more interfaces can be deployed on the panel of the network device, thereby further improving panel utilization of the network device. An interface quantity that can be implemented only by using a three-layer interface or a four-layer interface in the prior art can be implemented by using the double-layer interface provided in this embodiment of this application. In addition, problems such as high processing and assembly technique difficulty and high manufacturing costs that are caused when the three-layer interface or the four-layer interface is used are avoided.

Optionally, the network device may further include M horizontal interfaces, where M is greater than or equal to 1. A method for connecting the M horizontal interfaces belongs to the prior art, and details are not described. The horizontal interfaces and the vertical interfaces are deployed in a hybrid manner on the panel of the network device. This can meet a requirement of the network device on an interface quantity, and reduce hardware manufacturing costs of the network device.

A second aspect of embodiments of this application provides a vertical interface, and the vertical interface includes a housing, a connection component, and a connector. The vertical interface provides at least one optical interface/electrical interface. A width of each optical interface/electrical interface in the at least one optical interface/electrical interface is less than a height of the optical interface/electrical interface. The housing is configured to accommodate the vertical interface into a panel of a network device by using one of N vertical openings on the panel, where N is greater than or equal to 2. The connection component is configured to connect the vertical interface to a printed circuit board PCB on the network device. The connector is configured to transmit a signal to the PCB by using the connection component.

In a first implementation of the second aspect, the connection component includes a plurality of pins, the plurality of pins are disposed at the bottom of the vertical interface in a plurality of rows, and the vertical interface is connected to the PCB by using the plurality of pins.

In a second implementation of the second aspect, the connection component includes a cable disposed at a tail of the vertical interface, and the vertical interface is connected to the PCB by using the cable.

According to the second aspect or the first or the second implementation of the second aspect, in a third implementation of the second aspect, the vertical interface is a single-layer interface, and the single-layer interface provides one optical interface/electrical interface.

According to the second aspect or the first or the second implementation of the second aspect, in a fourth implementation of the second aspect, the vertical interface is a multi-layer interface, the multi-layer interface provides at least two optical interfaces/electrical interfaces, and the at least two optical interfaces/electrical interfaces share the connector. For beneficial effects of the vertical interface in the second aspect of this application and the implementations of the second aspect of this application, refer to descriptions of the beneficial effects of the network device in the first aspect and the implementations of the first aspect.

### BRIEF DESCRIPTION OF DRAWINGS

To describe the technical solutions in the embodiments of this application or in the prior art more clearly, the following briefly describes the accompanying drawings required for describing the embodiments.
FIG. 1a is a three-dimensional diagram of a horizontal single-layer interface;
FIG. 1b is a schematic structural diagram of a connector on a horizontal single-layer interface;
FIG. 1c is a schematic structural diagram of a panel that is of a network device and on which a plurality of horizontal single-layer interfaces are deployed;
FIG. 2a is a three-dimensional diagram of a horizontal double-layer interface;
FIG. 2b is a sectional view of a horizontal double-layer interface;
FIG. 2c is a schematic structural diagram of a panel that is of a network device and on which a plurality of horizontal double-layer interfaces are deployed;
FIG. 3 is a schematic structural diagram of a network device according to an embodiment of this application;
FIG. 4 is a schematic diagram of a panel of the network device shown in FIG. 3;
FIG. 5a is a schematic structural diagram of a vertical interface shown in FIG. 3 when the vertical interface is a single-layer interface;
FIG. 5b is a schematic structural diagram of the vertical interface shown in FIG. 5a when a connection component on the vertical interface is a pin;
FIG. 5c is a schematic structural diagram of the vertical interface shown in FIG. 5a when a connection component on the vertical interface is a cable;
FIG. 6a is a schematic structural diagram of a network device according to an embodiment of this application when a vertical interface is a double-layer interface;
FIG. 6b is a schematic structural diagram of the network device shown in FIG. 6a when a connection component on the vertical interface is a cable; and
FIG. 6c is a schematic structural diagram of the vertical interface shown in FIG. 6a when the vertical interface is a double-layer interface.

### DESCRIPTION OF EMBODIMENTS

The following describes the embodiments of this application in detail with reference to the accompanying drawings.

After an SC interface, an SFP interface, and a QSFP interface are mounted on a network device, from an aspect of appearance of the network device, the SC interface, the SFP interface, and the QSFP interface are all horizontal interfaces, that is, interfaces whose lengths are greater than widths.

Current horizontal interfaces include single-layer interfaces and double-layer interfaces. A single-layer interface includes only one interface, and a double-layer interface includes two superposed interfaces.

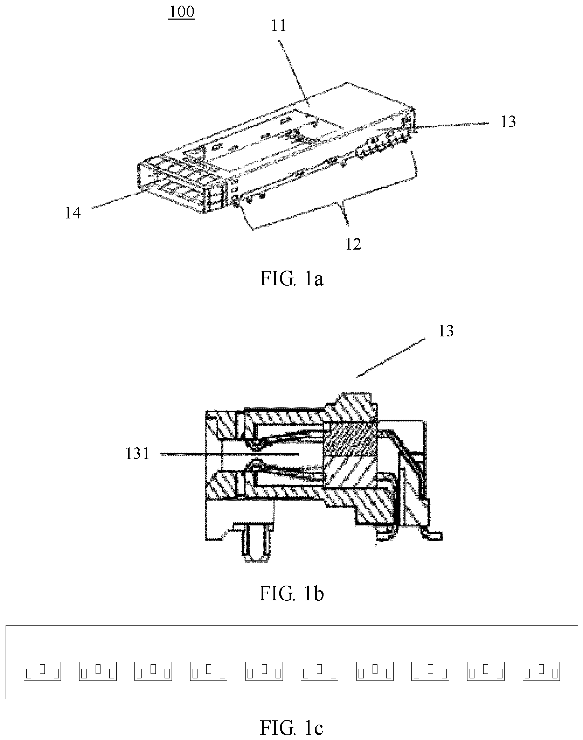

FIG. 1a is a three-dimensional diagram of a horizontal single-layer interface 100. The horizontal single-layer interface 100 includes a housing 11, a plurality of pins 12, and a connector 13. The connector 13 is mounted in the housing 11. Therefore, the connector 13 is invisible in FIG 1a. The plurality of pins 12 are disposed at the bottom of the housing 11 in two rows, and are configured to connect the horizontal single-layer interface 100 to a PCB. The horizontal single-layer interface 100 provides one interface 14.

FIG. 1b is a schematic structural diagram of the connector 13 of the horizontal single-layer interface 100. The connector 13 provides a jack 131 that is configured to connect to an optical module inserted through the interface 14 (not shown in FIG. 1b).

The horizontal single-layer interface 100 shown in FIG. 1a and FIG. 1b may be used to manufacture a network device. FIG. 1c is a schematic structural diagram of a panel that is of a network device and on which a plurality of horizontal single-layer interfaces are deployed.

It can be learned from FIG. 1c that when single-layer interfaces are deployed in the network device, a width of the panel of the network device is fully utilized, but a height of the panel is not fully utilized.

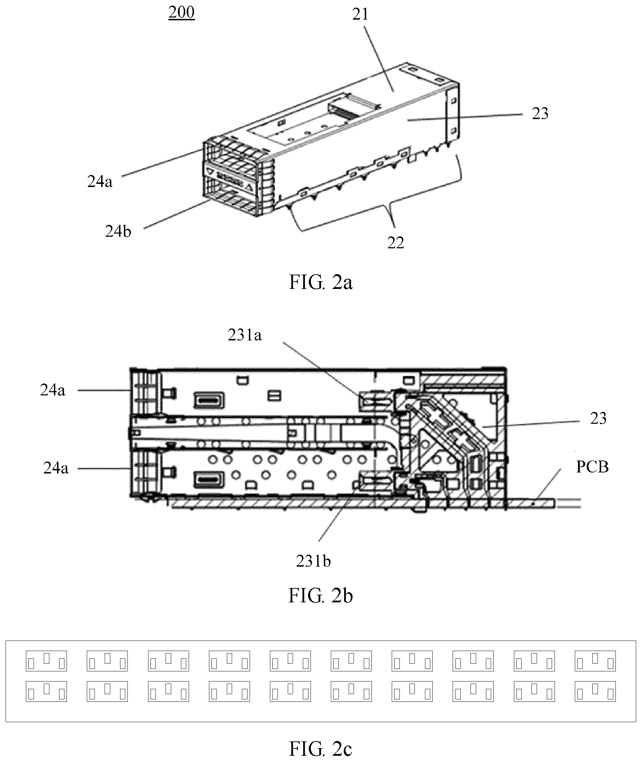

FIG. 2a is a three-dimensional diagram of a horizontal double-layer interface 200. The horizontal double-layer interface 200 includes a housing 21, a plurality of pins 22, and a connector 23. The connector 23 is mounted in the housing 21. Therefore, the connector 23 is invisible in FIG. 2a. The plurality of pins 22 are disposed at the bottom of the housing 21 in two rows, and are configured to insert the horizontal double-layer interface 200 into a PCB. The horizontal double-layer interface 200 provides two superposed interfaces 24a and 24b. FIG. 2b is a sectional view of the horizontal double-layer interface 200. It can be learned from FIG. 2b that the connector 23 of the horizontal double-layer interface 200 provides two jacks 231a and 231b that are respectively configured to connect to optical modules inserted through the interfaces 24a and 24b. In addition, because the connector 23 of the horizontal double-layer interface 200 needs to simultaneously connect the two interfaces 24a and 24b to the PCB, a structure of the connector 23 is much more complex than that of the connector 13 of the horizontal single-layer interface 100.

The horizontal double-layer interface 200 shown in FIG. 2a and FIG 2b may be used to manufacture a network device. FIG. 2c is a schematic structural diagram of a panel that is of a network device and on which a plurality of horizontal double-layer interfaces are deployed.

It can be learned from FIG. 2c that more interfaces can be deployed on a panel of a same width by using the horizontal double-layer interface than using the horizontal single-layer interface.

A width of a panel of a network device can be utilized to a maximum extent by using the horizontal double-layer interface. However, because a width of the network device is limited by a size of a cabinet, and the width of the panel of the network device cannot be increased freely, a quantity of interfaces provided on the network device by using existing horizontal double-layer interfaces still cannot meet a requirement. In a theoretical solution, the quantity of interfaces on the network device is expanded by using horizontal interfaces of three or more layers. However, superposition of three interfaces is required for a three-layer interface, and the three interfaces need to be connected to a PCB by using a same controller. This greatly increases processing and assembly technique difficulty and manufacturing costs.

Consequently, the three-layer interface is not put into practical use.

Disadvantages of a horizontal interface are described above by using an optical interface as an example, and a horizontal electrical interface also has similar problems. Therefore, an interface in the following embodiments of the present invention may be an optical interface or an electrical interface.

To further expand a quantity of interfaces on a network device and improve interface density of a panel, an embodiment of this application provides a network device. The network device includes a panel, a printed circuit board PCB, and N vertical interfaces, where N is greater than or equal to 2. Each of the N vertical interfaces provides at least one optical interface/electrical interface, and a width of each optical interface/electrical interface in the at least one optical interface/electrical interface is less than a height of the optical interface/electrical interface. The panel is connected to the PCB, and the panel includes N vertical openings. Each of the N vertical interfaces includes a housing, a connection component, and a connector. The housing is configured to accommodate the vertical interface into the panel by using one of the N vertical openings on the panel. The connection component is configured to connect the vertical interface to the PCB. The connector is configured to transmit a signal to the PCB by using the connection component. The vertical opening is a hole provided on the panel for deploying an interface on the panel. A width of the hole is less than a height of the hole, and the hole is sized to enable the vertical interface to be firmly embedded in the panel. "Optical interface/electrical interface" means "optical interface or electrical interface".

Correspondingly, an embodiment of this application further provides a vertical interface. The vertical interface includes a housing, a connection component, and a connector. The vertical interface provides at least one optical interface/electrical interface. A width of each optical interface/electrical interface in the at least one optical interface/electrical interface is less than a height of the optical interface/electrical interface. The housing is configured to accommodate the vertical interface into a panel of a network device by using one of N vertical openings on the panel. The connection component is configured to connect the vertical interface to a printed circuit board PCB on the network device. The connector is configured to transmit a signal to the PCB by using the connection component.

The following describes in detail the network device and the vertical interface provided in the embodiments of this application.

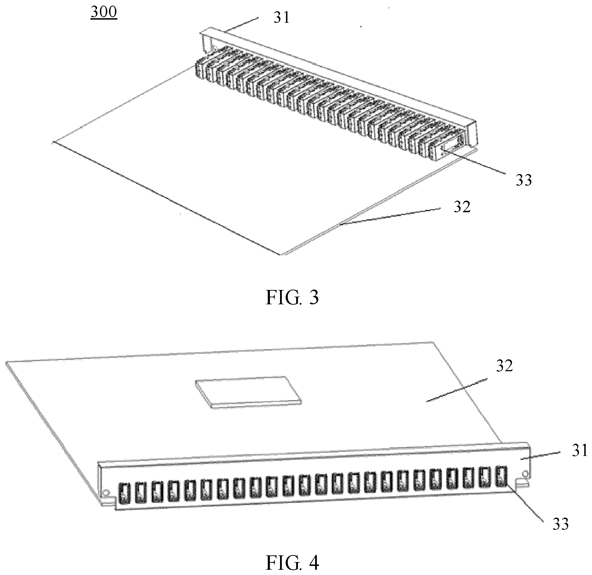

FIG. 3 is a schematic structural diagram of a network device 300 according to an embodiment of this application. The network device 300 includes a panel 31, a PCB 32, and N vertical interfaces 33, and the panel 31 is connected to the PCB 32, where N is greater than or equal to 2. Each of the N vertical interfaces provides at least one optical interface/electrical interface. A width of each optical interface/electrical interface is less than a height of the optical interface/electrical interface. FIG. 4 is a schematic diagram of the panel of the network device shown in FIG. 3. The panel 31 includes N vertical openings. Each vertical opening is configured to accommodate one vertical interface 33 into the panel 31. Each of the N vertical interfaces includes a housing, a connection component, and a connector. The housing is configured to accommodate the vertical interface into the panel by using one of the N vertical openings on the panel. The connection component is configured to connect the vertical interface to the PCB. The connector is configured to transmit a signal to the PCB by using the connection component.

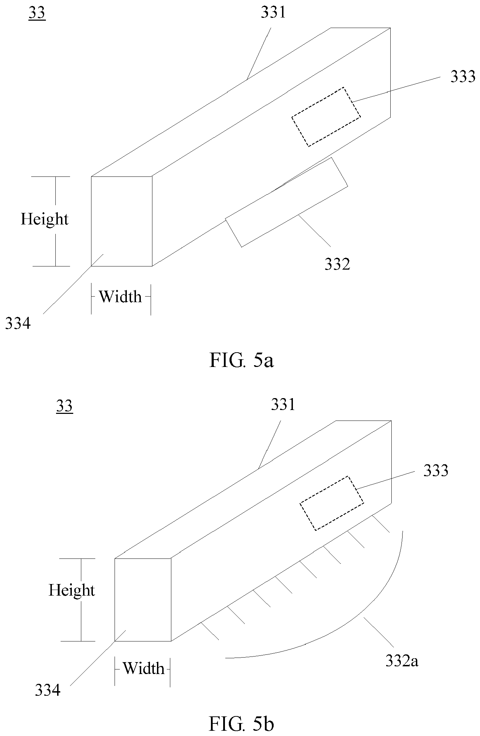

FIG. 5a is a schematic structural diagram of the vertical interface 33 when the vertical interface 33 is a single-layer interface. The vertical interface 33 includes a housing 331 and a connector 333. A width of the housing 331 is less than a height of the housing, and the housing 331 is configured to encapsulate the connector 333. A connection component 332 is disposed on the housing 331, and is configured to connect the vertical interface 33 to the PCB 32. The connector 333 is configured to transmit a signal to the PCB 32 by using the connection component 332. The vertical interface 33 is configured to provide one interface 334.

In an implementation, as shown in FIG. 5b, the connection component 332 is specifically a connection component 332a that includes a plurality of pins. The plurality of pins are disposed at the bottom of the vertical interface 33 in a plurality of rows. The connection component 332a is configured to connect the vertical interface 33 to the PCB 32 by using the plurality of pins. The connection may be welding, press fit, clamping, or connection implemented by using another mechanical part or fastener. The plurality of rows are at least two rows.

The pins are easy to insert and remove. Therefore, using the pins to connect the vertical interface 33 to the PCB 32 can improve assembly efficiency of the network device.

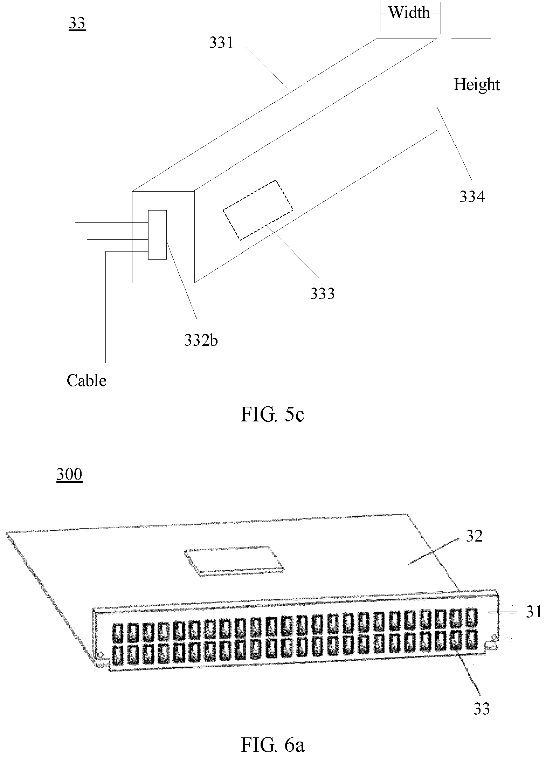

In another implementation, as shown in FIG. 5c, the connection component 332 is specifically a connection component 332b that includes a cable disposed at a tail of the vertical interface. The connection component 332b is configured to connect the vertical interface 33 to the PCB 32 by using the cable.

In this application, the width of the optical interface/electrical interface is less than the height of the optical interface/electrical interface. In other words, a value of the height of the optical interface/electrical interface is relatively large. In this case, when a vertical multi-layer interface is used, a relatively high technological requirement is imposed on the pins, and the pins are likely to be damaged. In contrast, because the cable is made of a flexible material and can be bent freely, unavailability of the vertical interface due to damage to the connection component can be avoided by using the cable as the connection component on the vertical multi-layer interface.

The embodiments of this application are described in FIG. 3, FIG. 4, and FIG. 5a to FIG. 5c by using an example in which the vertical interface is a single-layer interface. A case in which the vertical interface is a double-layer interface is similar to the case in which the vertical interface is a single-layer interface.

FIG. 6a is a schematic diagram of the panel of the network device 300 when the vertical interface is a double-layer interface. Compared with FIG. 4, a quantity of interfaces provided by the network device in FIG. 6a is twice a quantity of interfaces provided by the network device in FIG. 4.

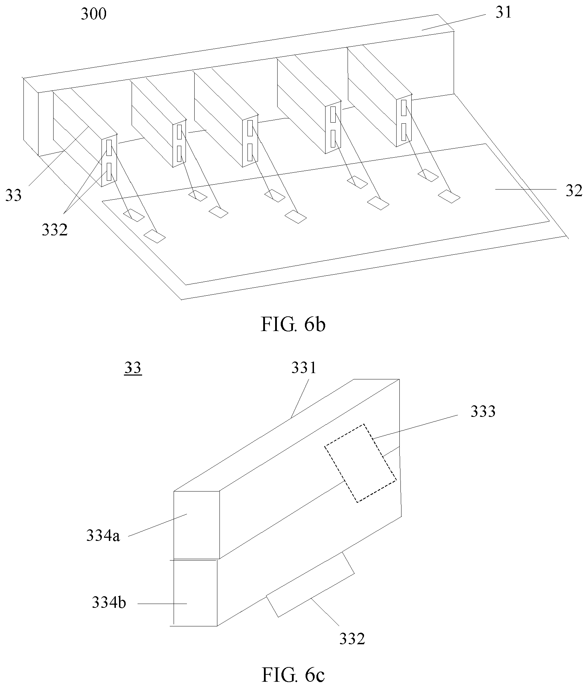

FIG. 6b is a schematic structural diagram of the network device 300 when the vertical interface 33 is a double-layer interface and the connection component 332 is a cable. Each double-layer interface provides two interfaces, and each interface is connected to the PCB 32 by using a cable of the interface. A case in which the connection component on the double-layer interface includes a plurality of pins is similar to the case in which the connection component on the single-layer interface includes a plurality of pins, and details are not described again.

FIG. 6c is a schematic structural diagram of the vertical interface 33 when the vertical interface 33 is a double-layer interface. The vertical interface 33 provides two interfaces 334a and 334b. The vertical interface 33 includes a housing 331, a connection component 332, and a connector 333. The connector 333 is simultaneously connected to the interfaces 334a and 334b. In other words, the interfaces 334a and 334b share the connector 333. A width of each interface is less than a height of the interface. The housing 331 is configured to encapsulate the connector 333. The connection component 332 is configured to separately connect the interfaces 334a and 334b to the PCB 32. The connector 333 is configured to transmit a signal to the PCB 32 by using the connection component 332.

The width of the optical interface/electrical interface provided by the vertical interface in this embodiment of this application is less than the height of the optical interface/electrical interface. Therefore, when a width of the panel of the network device is fixed, more interfaces can be disposed on the panel. This increases interface density of the panel, improves panel size utilization, and increases interface deployment flexibility.

In an example in which the width of the panel is 19 inches (48.26 cm), when an SFP interface whose width is 14.5 mm and whose height is 8.95 mm is used, considering a distance between two interfaces and an edge distance of the panel, 24 single-layer interfaces can be disposed on the panel when a single-layer interface is used. If the vertical interface provided in this application, such as an interface whose width is 8.95 mm and whose height is 14.5 mm, is used, at least 36 single-layer interfaces can be disposed on a panel of the same width. When a double-layer interface is used, 24 double-layer interfaces can be disposed on the panel in the prior art. In other words, 48 interfaces can be provided. However, in this embodiment of this application, at least 36 double-layer interfaces can be disposed on the panel. In other words, at least 72 interfaces are provided. It can be learned that when an SFP interface is used, a quantity of interfaces that can be provided on the panel of the network device in this embodiment of this application is 1.5 times a quantity of interfaces that can be provided on a panel of a same width in the prior art.

Still in an example in which the width of the panel is 19 inches (48.26 cm), when a QSFP interface whose width is 19.85 mm and whose height is 9.7 mm is used, considering a distance between two interfaces and an edge distance of the panel, 18 single-layer interfaces can be disposed on the panel when a single-layer interface is used. If the vertical interface provided in this application, such as an interface whose width is 9.7 mm and whose height is 19.85 mm, is used, at least 36 single-layer interfaces can be disposed on a panel of the same width. When a double-layer interface is used, 18 double-layer interfaces can be disposed on the panel in the prior art. In other words, 36 interfaces are provided. However, in this embodiment of the present invention, at least 36 double-layer interfaces can be disposed on the panel. In other words, at least 72 interfaces are provided. It can be learned that when a QSFP interface is used, a quantity of interfaces that can be provided on the panel of the network device in this embodiment of this application is twice a quantity of interfaces that can be provided on a panel of a same width in the prior art.

According to the network device provided in this embodiment of this application, more interfaces can be deployed on the panel by using the vertical interface without changing the width of the panel of the network device. This increases interface density of the panel, and improves panel utilization.

In addition, for some interfaces (for example, a QSFP interface), an interface quantity that can be implemented only by using a double-layer interface in the prior art can be implemented by using the single-layer interface in this embodiment of this application. It can be learned from a comparison between FIG. 1b and FIG. 2b that it is much more complex to implement the double-layer interface than the single-layer interface. Therefore, according to the solution in this embodiment of this application, when a same interface quantity is implemented, required manufacturing costs are lower, a connection to a PCB is simpler, and device maintenance is more convenient.

Further, an interface quantity that can be implemented only by using a three-layer interface or a four-layer interface in the prior art can be implemented by using the double-layer interface provided in this embodiment of this application. In addition, problems such as high processing and assembly technique difficulty and high manufacturing costs that are caused when the three-layer interface or the four-layer interface is used are avoided.

Based on the foregoing embodiments of this application, this application may further include the following implementations of hybrid deployment:
1. Some of the N vertical interfaces are deployed as single-layer interfaces, and the other vertical interfaces are deployed as double-layer interfaces.
2. In addition to the N vertical interfaces, M horizontal interfaces are deployed on the panel of the network device, where M is greater than or equal to 1.

Different interfaces are deployed in a hybrid manner on the panel of the network device. This can flexibly meet a requirement of the network device on an interface quantity, and reduce hardware manufacturing costs of the network device.

The foregoing descriptions are merely preferred implementations of this application. It should be noted that a person of ordinary skill in the art may make several improvements or polishing without departing from the principle of this application and the improvements or polishing shall fall within the protection scope of this application.

## Claims

1. A network device, comprising a panel, a printed circuit board PCB, and N vertical interfaces, wherein N is greater than or equal to 2, each of the N vertical interfaces provides at least one optical interface/electrical interface, and a width of each optical interface/electrical interface in the at least one optical interface/electrical interface is less than a height of the optical interface/electrical interface;
the panel is connected to the PCB, and the panel comprises N vertical openings; and
each of the N vertical interfaces comprises a housing, a connection component, and a connector, the housing is configured to accommodate the vertical interface into the panel by using one of the N vertical openings on the panel, the connection component is configured to connect the vertical interface to the PCB, and the connector is configured to transmit a signal to the PCB by using the connection component.

2. The network device according to claim 1, wherein the connection component comprises a plurality of pins, the plurality of pins are disposed at the bottom of the vertical interface in a plurality of rows, and the vertical interface is connected to the PCB by using the plurality of pins.

3. The network device according to claim 1, wherein the connection component comprises a cable disposed at a tail of the vertical interface, and the vertical interface is connected to the PCB by using the cable.

4. The network device according to any one of claims 1 to 3, wherein some or all of the N vertical interfaces are single-layer interfaces, and each single-layer interface provides one optical interface/electrical interface.

5. The network device according to any one of claims 1 to 3, wherein some or all of the N vertical interfaces are multi-layer interfaces, each multi-layer interface provides at least two optical interfaces/electrical interfaces, and the at least two optical interfaces/electrical interfaces share the connector.

6. A vertical interface, comprising a housing, a connection component, and a connector, wherein
the vertical interface provides at least one optical interface/electrical interface, and a width of each optical interface/electrical interface in the at least one optical interface/electrical interface is less than a height of the optical interface/electrical interface;
the housing is configured to accommodate the vertical interface into a panel of a network device by using one of N vertical openings on the panel, wherein N is greater than or equal to 2;
the connection component is configured to connect the vertical interface to a printed circuit board PCB on the network device; and
the connector is configured to transmit a signal to the PCB by using the connection component.

7. The vertical interface according to claim 6, wherein the connection component comprises a plurality of pins, the plurality of pins are disposed at the bottom of the vertical interface in a plurality of rows, and the vertical interface is connected to the PCB by using the plurality of pins.

8. The vertical interface according to claim 6, wherein the connection component comprises a cable disposed at a tail of the vertical interface, and the vertical interface is connected to the PCB by using the cable.

9. The vertical interface according to any one of claims 6 to 8, wherein the vertical interface is a single-layer interface, and the single-layer interface provides one optical interface/electrical interface.

10. The vertical interface according to any one of claims 6 to 8, wherein the vertical interface is a multi-layer interface, the multi-layer interface provides at least two optical interfaces/electrical interfaces, and the at least two optical interfaces/electrical interfaces share the connector.
